# EUROPÄISCHE PATENTSCHRIFT

(11) **EP 4 115 767 B1**
(45) Veröffentlichungstag und Bekanntmachung des Hinweises auf die Patenterteilung: **30.07.2025**
(21) Anmeldenummer: 22175012.8
(22) Anmeldetag: 24.05.2022
(51) Int. Cl.: A47B 21/06, A47B 96/20, A01K 63/00

(54) **VIVARIEN-UNTERSCHRANK**
VIVARIUM CABINET
ARMOIRE INFÉRIEURE POUR VIVARIUM

(30) Priorität: 31.05.2021 DE 202021102969 U
(43) Veröffentlichungstag der Anmeldung: 11.01.2023
(73) Patentinhaber: Oase GmbH, 48477 Hörstel-Riesenbeck (DE)
(72) Erfinder: Muck, Thorsten, 49479 Ibbenbüren (DE)
(74) Vertreter: Engelmann, Kristiana

(56) Entgegenhaltungen:
- CN-U- 212 507 853
- DE-A1- 102012 000 027
- FR-A1- 2 916 818
- US-A1- 2016 345 726

## Beschreibung

Die vorliegende Erfindung betrifft einen Unterschrank für Vivarien, insbesondere Aquarien. Unterschränke für Vivarien nehmen die für den Betrieb eines Vivariums notwendige technische Ausstattung wie Vorrichtungen zur Beleuchtungssteuerung und/oder zur Temperaturkontrolle auf. Insbesondere bei der Verwendung als Unterschrank für Aquarien kann der Unterschrank zudem Außenfilter für die Filtration des Aquariumwassers aufnehmen. Für im Inneren des Unterschranks angeordnete Aquarientechnik, insbesondere einen Außenfilter, sind Stromversorgungsleitungen sowie Zu- und Ableitungen für das aus dem Aquarium entnommene Wasser bzw. das zum Aquarium zurückgeführte Wasser vorzusehen. Aufgabe der vorliegenden Erfindung ist es, einen Unterschrank bereitzustellen, der eine optisch ansprechende und gleichzeitig besonders einfach zu bedienende Durchführung für diese Leitungen ermöglicht.

Aus der CN 212 507 853 U1 ist ein Aquarienunterschrank bekannt, der einen Rahmen mit vertikalen Pfosten aufweist, wobei zwischen zwei benachbarten vertikalen Pfosten erste Magnetverschlusselemente angeordnet sind, über die eine mit zweiten Magnetverschlusselementen versehene Türplatte zwischen zwei vertikale Pfosten in den Rahmen eingesetzt werden kann.

Die US 2016 345 726 A1 offenbart eine Rahmenstruktur mit einem hohlen Rahmen und einer Mehrzahl von Abdeck- bzw. Blendenelemente, die in Öffnungen der Rahmenstruktur einsetzbar sind.

Aus der DE 10 2012 000 027 A21 ist ein Raumgestaltungssystem mit mindestens zwei dreidimensionalen Grundelementen mit jeweils mehreren Seiten, mindestens zwei Verbindungselementaufnahmen und mindestens einem Verbindungselement bekannt, wobei in mindestens einer der Seiten eines jeden der Grundelemente mindestens eine der Verbindungselementaufnahmen für das Verbindungselement vorgesehen ist, wobei das Verbindungselement durch Magnetkraft in den Verbindungselementaufnahmen gehalten wird und die Verbindung der Grundelemente durch Zusammensetzen mit dem Verbindungselement erfolgt.

Die vorliegende Aufgabe wird gelöst durch einen Unterschrank mit Seitenwänden, wobei zumindest eine Seitenwand eine Ausnehmung und zumindest ein benachbart zur Ausnehmung angeordnetes erstes Magnetverschlusselement aufweist. Weiterhin weist der Unterschrank zumindest ein in die Ausnehmung einbringbares und die Ausnehmung in der Einbauposition zumindest teilweise verschließendes Blendenelement auf. Das Blendenelement weist ein zweites Magnetverschlusselement auf, wobei das zweite Magnetverschlusselement in der Einbauposition des Blendenelements in der Ausnehmung korrespondierend zu dem ersten Magnetverschluss angeordnet ist. In der Einbauposition wird das Blendenelement ausschließlich durch zwischen dem ersten Magnetverschlusselement und dem zweiten Magnetverschlusselement wirkende magnetische Kräfte gehalten. Es sind keine weiteren Beschlagteile wie Scharniere vorzusehen oder vorhanden. Begrenzende Anschläge für das Blendenelement sind nicht notwendig. Die Ausnehmung kann einfach gestaltet werden und ist bei aus der Ausnehmung entferntem Blendenelement frei von Beschlagteilen, die die Durchführung von Kabeln durch die Ausnehmung behindern könnten. Das Blendenelement kann auf einfache Weise werkzeuglos in die Ausnehmung eingesetzt und aus der Ausnehmung entfernt werden. Durch den Verzicht auf weitere Beschlagteile ist ein solcher Unterschrank einfach zu erstellen und ermöglicht ein klares, optisch ansprechendes Erscheinungsbild sowohl mit als auch ohne in die Ausnehmung eingebrachtes Blendenelement.

Benachbart zur Ausnehmung angeordnet bedeutet im Sinne der Erfindung, dass das erste Magnetverschlusselement so angeordnet ist, dass es mit dem zweiten Magnetverschlusselement des Blendenelements in einer Einbauposition in eine magnetische Wechselwirkung treten kann, wobei die magnetischen Kräfte zwischen dem ersten und dem zweiten Magnetverschlusselement groß genug sind, um das Blendenelement in der Ausnehmung festzulegen. Das erste und/oder zweite Magnetverschlusselement ist hierbei als magnetisches Element, insbesondere als Permanentmagnet, ausgebildet. Das jeweils andere Magnetverschlusselement kann ebenfalls als magnetisches Element, insbesondere als Permanentmagnet, ausgestaltet sein. Vorzugsweise ist das jeweils andere Magnetverschlusselement jedoch aus einem nicht-magnetischen, jedoch magnetisierbaren ferromagnetischen Element, insbesondere aus einem magnetisierbaren Stahlmaterial, ausgestaltet.

Das erste Magnetverschlusselement ist in eine die Ausnehmung begrenzende Stirnseite der Seitenwand eingelassen. Hierdurch kann das erste Magnetelement benachbart zur Ausnehmung angeordnet werden. Gleichzeitig wird so eine einfache Zentrierbarkeit des Blendenelements über die magnetischen Kräfte innerhalb der Ausnehmung erreicht. Zudem ermöglicht diese Art der Anordnung des ersten Magnetelements eine optisch besonders klare und somit ansprechende Gestaltung des Unterschranks.

Das zweite Magnetverschlusselement ist in eine Seite des Blendenelements eingelassen, das in einer Einbausituation des Blendenelements der die Ausnehmung begrenzenden Stirnseite der Seitenwand zugewandt ist. Diese Anordnung von erstem und zweitem Magnetverschlusselement ermöglicht eine automatische Zentrierung des Blendenelements in der Ausnehmung relativ zu einer nach außen gerichteten Fläche der Seitenwand. Das Blendenelement kann einfach in die Ausnehmung eingebracht werden. Zudem ermöglicht diese Anordnung eine klare und optisch ansprechende Gestaltung des Blendenelements und somit des Schranks.

Das zumindest eine Blendenelement ist bündig mit einer äußeren Oberfläche des Unterschranks in der Ausnehmung festlegbar. Hierdurch wird eine besonders klare und optisch ansprechende Gestaltung des Unterschranks ermöglicht. Bekannte Blenden, die in Ausnehmungen für Kabeldurchführungen eingesetzt werden können und dort mechanisch fixiert werden, weisen typischerweise Anschlagbereiche auf, die über die Ausnehmung hinausreichen und mit denen die Blende an der äußeren Oberfläche der Seitenwand anliegt. Eine solche Blende steht somit gegenüber der Oberfläche der Seitenwand über und ist notwendigerweise größer als die Ausnehmung. Demgegenüber ermöglicht die erfindungsgemäße Lösung durch den so ermöglichten Verzicht auf Anschlagflächen eine bündige Anordnung der jeweils äußeren Oberflächen von Seitenwand und Blendenelement und in der Folge ein optisch besonders ansprechendes Erscheinungsbild des Unterschranks.

Bevorzugt ist das zweite Magnetverschlusselement als nicht-magnetisches, jedoch magnetisierbares Element ausgebildet. Das Blendenelement ist somit nicht magnetisch und daher einfacher zu verstauen. Insbesondere kann das Blendenelement bei Nichtbenutzung im Inneren des Unterschranks angeordnet werden, ohne mit etwa im Unterschrank angeordneter Technik des Vivariums, wie Beleuchtungssteuerung, Temperatursteuerung oder ggf. einer Filteranlage magnetisch wechselzuwirken. Ein solches Blendenelement ist besonders einfach zu handhaben.

Vorzugsweise weisen das erste Magnetverschlusselement und das zu dem ersten Magnetverschlusselement korrespondierend am Blendenelement angeordnete zweite Magnetverschlusselement sich in der Einbausituation gegenüberliegende Flächen mit in etwa gleichen räumlichen Ausdehnungen auf. Wenn das erste Magnetverschlusselement und das zweite Magnetverschlusselement sich einander gegenüberstehende Flächen, insbesondere Querschnittsflächen, mit in etwa gleichen räumlichen Ausdehnungen aufweisen, ist die Zentrierung des Blendenelements in der Einbauposition nicht nur relativ zu einer äußeren Oberfläche der Seitenwand, sondern auch in einer Richtung parallel zu der äußeren Oberfläche besonders einfach. Wenn das erste und das zweite Magnetverschlusselement beispielsweise runde oder rechteckige Querschnitte mit gleicher Fläche aufweisen, sind diese in der Einbausituation bestrebt, genau übereinander angeordnet zu Liegen zu kommen.

Hierdurch kann die Einbauposition des Blendenelements in der Ausnehmung auf einfache Weise genau vorgegeben werden.

Alternativ kann das erste Magnetverschlusselement oder das zweite Magnetverschlusselement als ein sich flächig erstreckendes Element ausgestaltet sein. Besonders bevorzugt ist dieses sich flächig erstreckende Element aus einem nicht-magnetischen, jedoch magnetisierbaren Material erstellt. In dieser alternativen Ausgestaltung kann ein die Ausnehmung nur teilweise verschließendes Blendenelement entlang der flächigen Erstreckung des jeweiligen Magnetverschlusselements in verschiedenen, in der Ausnehmung entlang der flächigen Erstreckung des Magnetverschlusselements verschobenen Positionen angeordnet werden.

Mit Vorteil weist die Ausnehmung eine rechteckige Kontur auf und erstreckt sich horizontal über die gesamte Seitenwand des Unterschranks. Aquarienunterschränke sind besonders stabil ausgestaltet, um das hohe Gewicht eines mit Wasser gefüllten Aquariums aufnehmen und in den Boden ableiten zu können. Entsprechende Unterschränke für als Aquarien ausgestaltete Vivarien weisen hierzu ein vorzugsweise innenliegend angeordnetes Gestell, beispielsweise ein Stahlrohrgestell, auf. Die Last eines auf dem Unterschrank abgestellten Aquariums wird dabei von dem Gestell aufgenommen. Die Seitenwände eines solchen Unterschrankes sind, anders als bei herkömmlichen Unterschränken, nicht an der Statik des Unterschranks beteiligt, sondern stellen ein Verkleidungselement dar. Daher ist es auf einfache Weise möglich, eine Ausnehmung in einer Seitenwand vorzusehen, die sich horizontal über die gesamte Seitenwand erstreckt. Eine rechteckige Kontur dieser Ausnehmung ermöglicht ein besonders ansprechendes Erscheinungsbild des Unterschranks. Die Ausnehmung bzw. das in die Ausnehmung einzusetzende Blendenelement kann sich mit einer klaren Linienführung in den Unterschrank einfügen.

Vorzugsweise ist das zumindest eine Blendenelement um 180° um eine Hauptachse gedreht in der Ausnehmung festlegbar. Hierzu kann das Blendenelement ein sich durch das Blendenelement erstreckendes zweites Magnetverschlusselement oder mehrere zweite Magnetverschlusselemente an einander gegenüberliegenden Seiten des Blendenelements aufweisen. Hieraus resultiert eine besonders einfache Bedienbarkeit, da weniger streng darauf geachtet werden muss, das Blendenelement in einer bestimmten Orientierung in die Ausnehmung einzubringen. Bei einem quaderförmig ausgebildeten Blendenelement ist es möglich, dass das Blendenelement um 180° um jede der drei Hauptachsen des Quaders verdreht in die Ausnehmung eingesetzt werden kann. Die Bedienbarkeit des Unterschranks ist somit verbessert. Auch kann so die Rückseite des Blendenelements optisch abweichend gestaltet sein und ermöglicht es dadurch dem Benutzer, optisch verschiedene Varianten des Unterschranks zu erzeugen.

Bevorzugt weist der Unterschrank erste Magnetverschlusselemente auf einander gegenüberliegenden Seiten der Ausnehmung auf, insbesondere oberhalb und unterhalb der Ausnehmung. Hierdurch kann ein besonders guter Sitz des Blendenelements in der Ausnehmung erzielt werden.

Vorzugsweise umfasst der Unterschrank zumindest ein Set von zumindest zwei wahlweise in die Ausnehmung einbringbaren Bedienelementen unterschiedlicher Abmessungen. Hierbei ist ein Blendenelement des Sets so ausgebildet, dass es die Ausnehmung in der Einbausituation vollständig verschließt. Zumindest ein weiteres Blendenelement des Sets ist so ausgebildet, dass es die Ausnehmung nur teilweise verschließt. Bei der Verwendung dieses weiteren Blendenelements bildet der Unterschrank eine Kabeldurchführung in der Seitenwand aus. Bereits die Ausnehmung ohne Blendenelement bildet eine Kabeldurchführung. Eine Kabeldurchführung ist jedoch typischerweise für das einfache Einbringen von Kabeln größer ausgestaltet, als es für die eigentlichen Kabel im Betrieb notwendig ist. So sind typischerweise Anschlussstücke von Kabeln wie Stecker deutlich größer als das eigentliche Kabel. Das weitere Blendenelement ermöglicht es, die Ausnehmung nach der Installation der Kabel zu verschließen und ein optisch ansprechendes Erscheinungsbild des Unterschranks zu erzielen. Besonders bevorzugt weist das Set von Blendenelementen zwei, vorzugsweise baugleiche, Blendenelemente auf, die in der Einbausituation die Ausnehmung nur teilweise verschließen. Die ersten und zweiten Magnetverschlusselemente sind hierbei so angeordnet, dass die beiden weiteren Blendenelemente dergestalt in der Ausnehmung fixierbar sind, dass sie die Kabeldurchführung zwischen sich ausbilden. Hierdurch ist es möglich, nicht nur die Größe der Kabeldurchführung, sondern auch den Ort der Kabeldurchführung in der Seitenwand festzulegen. So ist es z.B. möglich, die Kabeldurchführung mittig in der Ausnehmung zentriert anzuordnen oder je nach Bedarf zur Rückwand hin zu verlagern.

Als praktische Ausstattung kann der Unterschrank zumindest ein weiteres, in eine Wand des Unterschranks, vorzugsweise jedoch auf einer Innenseite einer den Schrank verschließenden Tür des Unterschranks eingelassenes Magnetelement aufweisen. An einem solchen Magnetelement können auf einfache Weise regelmäßig für die Pflege des Vivariums benötigte Werkzeuge wie beispielsweise eine Schere angeordnet werden. Werkzeuge aus magnetisierbarem Material können einfach an diesem eingelassenen Magnetelement angeordnet werden und sind dort leicht zugänglich. Werkzeuge aus nicht magnetisierbarem Material können mit entsprechenden Elementen aus magnetisierbarem oder magnetischem Material versehen werden, um an einem solchen Magnetelement, insbesondere an einer Innenseite einer Tür des Unterschrankes, verstaut werden zu können. Auch nicht benötigte Blendenelemente können dort im Inneren des Unterschranks fixiert gelagert werden.

Weitere Vorteile und Einzelheiten sind der nachstehenden Figurenbeschreibung zu entnehmen. In den schematischen Figuren zeigt:
- Fig. 1: einen erfindungsgemäßen Unterschrank für Aquarien mit einem darauf angeordneten Aquarium und einer Kabeldurchführung auf der von vorne betrachteten linken Seite;
- Fig. 2: eine Seitenansicht der linken Seite des erfindungsgemäßen Unterschranks für Aquarien gemäß Fig. 1, wobei die Ausnehmung mit einem die Ausnehmung vollständig verschließenden Blendenelement verschlossen ist;
- Fig. 3: eine Detailansicht des Unterschranks für Aquarien gemäß Fig. 2, mit einer Darstellung der ersten und zweiten Magnetverschlusselemente;
- Fig. 4: den erfindungsgemäßen Unterschrank gemäß Fig. 1, bei dem die Ausnehmung durch zwei die Ausnehmung nur teilweise verschließende Blendenelemente verschlossen ist, die zwischen sich eine Kabeldurchführung ausbilden;
- Fig. 5: eine Detailansicht gemäß Fig. 4 mit einer Darstellung der ersten und zweiten Magnetverschlusselemente.

Gleich oder ähnlich wirkende Teile sind, sofern dienlich, mit identischen Bezugsziffern versehen. Einzelne technische Merkmale der nachfolgend beschriebenen Ausführungsbeispiele können mit den Merkmalen des Anspruchs 1 sowie mit den Merkmalen einzelner vorbeschriebener Ausführungsbeispiele zu erfindungsgemäßen Gegenständen kombiniert werden.

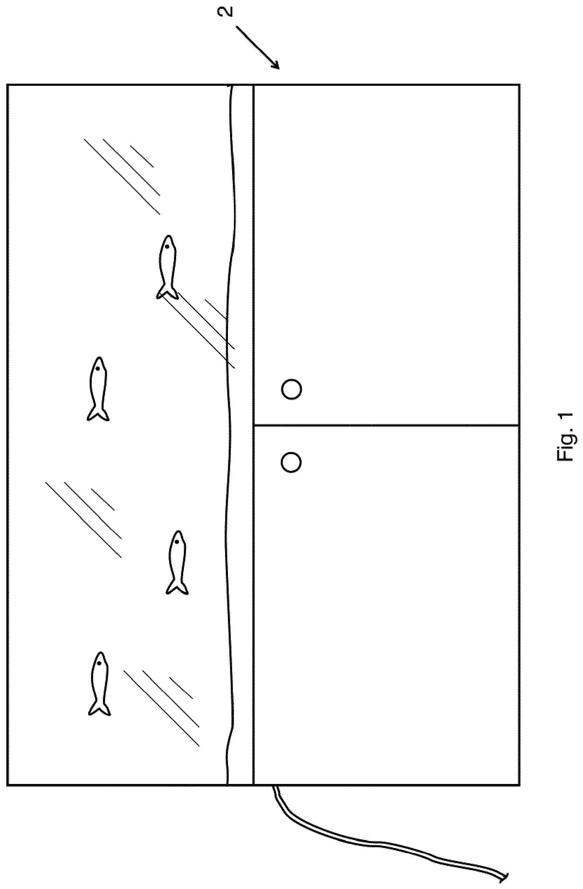

Fig. 1 zeigt einen erfindungsgemäßen Unterschrank 2 für Vivarien in Form eines Unterschranks 2 für ein Aquarium mit einem darauf angeordneten Aquarium. In der Ansicht ist auf der linken Seite ein Kabel dargestellt, das in den Unterschrank 2 für Vivarien führt.

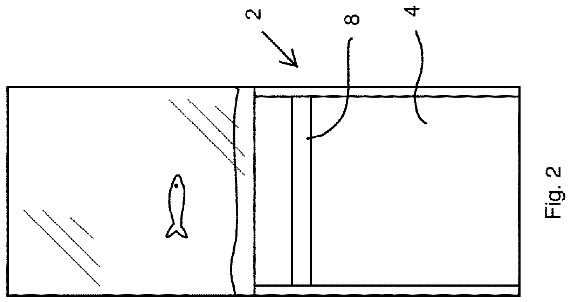

Fig. 2 zeigt den Unterschrank 2 für Vivarien gemäß Fig. 1 in einer Seitenansicht. Der Unterschrank 2 weist eine Seitenwand 4 auf, in der eine Ausnehmung 6 angeordnet ist. Die Ausnehmung 6 gemäß Fig. 2 weist eine rechteckige Kontur auf und erstreckt sich vollständig durch die Seitenwand 4. In der Darstellung gemäß Fig. 2 ist die Ausnehmung 6 durch ein Blendenelement 8 verschlossen. Das Blendenelement 8 ist so ausgebildet, dass es die Ausnehmung 6 in der Einbausituation vollständig verschließt. Das Blendenelement 8 wird über erste Magnetverschlusselemente 10 und zweite Magnetverschlusselemente 12 in der Ausnehmung 6 gehalten.

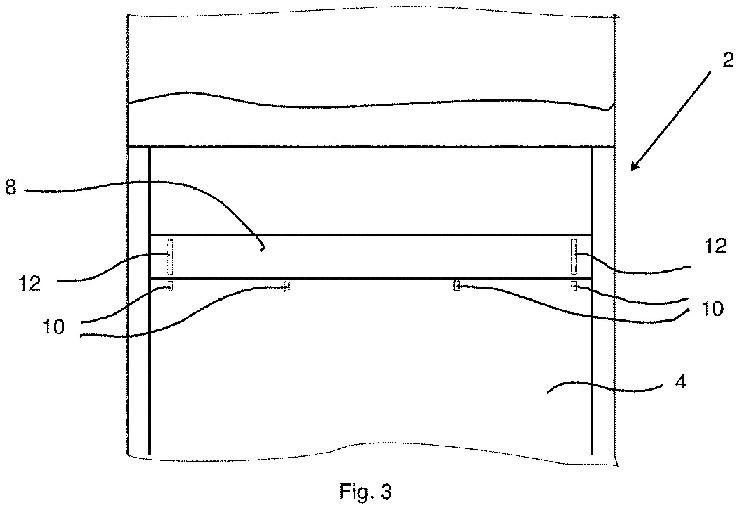

Fig. 3 zeigt die Anordnung der ersten Magnetverschlusselemente 10 und zweiten Magnetverschlusselemente 12. In der Seitenwand 4 sind unterhalb der Ausnehmung 6 vier erste Magnetverschlusselemente 10 angeordnet. Die ersten Magnetverschlusselemente 10 befinden sich unmittelbar benachbart zur Ausnehmung 6 an der Stirnseite des unteren Teils der Seitenwand 4. Das Blendenelement 8 weist zwei zweite Magnetverschlusselemente 12 auf. Die ersten Magnetverschlusselemente 10 sind als Permanentmagneten ausgebildet. Die zweiten Magnetverschlusselemente 12 sind als nicht magnetische, jedoch magnetisierbare Stahlstifte ausgebildet, die in das Blendenelement 8 eingelassen sind. Die zweiten Magnetverschlusselemente 12 sind hierbei so im Blendenelement 8 positioniert, dass sie in einer Einbausituation des Blendenelements 8 in der Ausnehmung 6 jeweils gegenüber einem der ersten Magnetverschlusselemente 10 zu liegen kommen. Die ersten Magnetverschlusselemente 10 und die zweiten Magnetverschlusselemente 12 wirken so zusammen, dass das Blendenelement 8 selbsttätig eine bestimmte, vordefinierte Position in der Ausnehmung 6 einnimmt. In dieser Position sind die ersten Magnetverschlusselemente 10 und die zweiten Magnetverschlusselemente 12 koaxial übereinander ausgerichtet. Das Blendenelement 8 kann werkzeuglos in die Ausnehmung 6 eingesetzt sowie ausgehend von einem Innenraum des Unterschranks 2 nach außen aus der Ausnehmung 6 herausgedrückt werden. Weil keine Anschläge für das Blendenelement 8 vorgesehen sind, kann es auch von außen in Richtung des Innenraums des Unterschranks 2 aus der Ausnehmung 6 herausgedrückt werden. In der Einbauposition ist das Blendenelement 8 bündig mit der äußeren Oberfläche der Seitenwand 4 ausgerichtet. Das Blendenelement 8 kann um jede seiner drei Hauptachsen um 180° gedreht in der Ausnehmung 6 platziert werden. Die Bedienbarkeit ist somit deutlich verbessert, da beim Einbringen in die Ausnehmung 6 nicht auf eine exakte Ausrichtung des Blendenelements 8 geachtet werden muss.

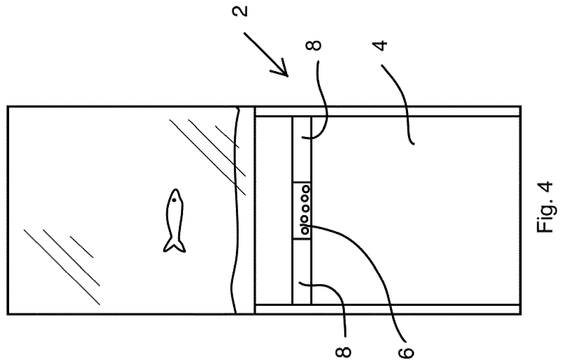

Fig. 4 zeigt den Unterschrank 2 in einer Ansicht gemäß Fig. 2. In Fig. 4 ist statt des die Ausnehmung 6 vollständig verschließenden Blendenelements 8 die Ausnehmung 6 durch zwei weitere, diese nur teilweise verschließende Blendenelemente 8 verschlossen. Die weiteren Blendenelemente 8 bilden zwischen sich eine Kabeldurchführung aus. In Fig. 4 sind fünf Kabel in der Kabeldurchführung angeordnet dargestellt.

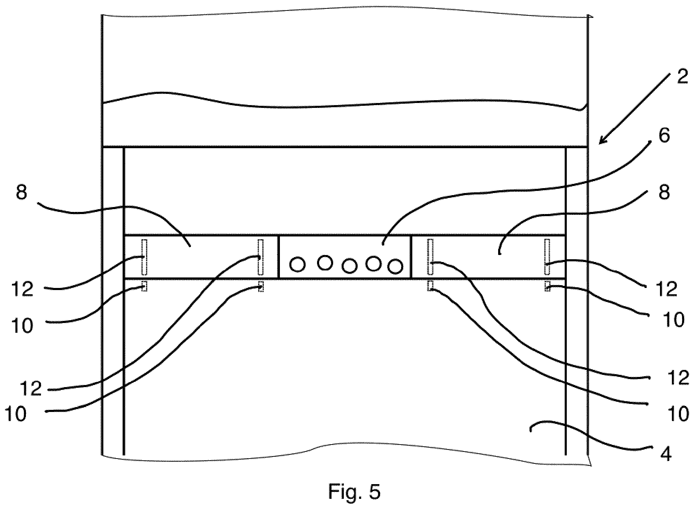

Fig. 5 zeigt eine Detailansicht aus Fig. 4, bei der die ersten Magnetverschlusselemente 10 sowie die zweiten Magnetverschlusselemente 12 dargestellt sind. Jedes der beiden weiteren Blendenelemente 8 weist zwei zweite Magnetverschlusselemente 12 auf, die in einer Einbauposition mit jeweils zwei ersten Magnetverschlusselementen 10, die benachbart zur Ausnehmung 6 in die Seitenwand 4 eingelassen sind, zusammenwirken. Die zweiten Magnetverschlusselemente 12 sind wiederum als nicht-magnetische, jedoch magnetisierbare Stahlstifte ausgebildet. Bei den ersten Magnetverschlusselementen 10 handelt es sich um dieselben ersten Magnetverschlusselemente 10, die auch schon in der Darstellung gemäß Fig. 3 gezeigt sind. Bei dem Unterschrank gemäß Darstellung nach Fig. 4 und 5 wurde das Blendenelement 8, das in den Darstellungen nach Fig. 2 und 3 in der Ausnehmung 6 angeordnet wurde, entfernt und durch die beiden kürzeren, die Ausnehmung 6 nur teilweise verschließenden weiteren Blendenelemente 8, die in Fig. 4 und 5 dargestellt sind, ersetzt.

Bei einem Unterschrank 2 für Vivarien, insbesondere Aquarien, gemäß dem Ausführungsbeispiel kann somit die in der Seitenwand 4 angebrachte Ausnehmung 6, die zur Kabeldurchführung dient, durch ein Blendenelement 8 vollständig verschlossen werden, wenn die Kabeldurchführung nicht notwendig ist. Die Ausnehmung 6 kann auch durch zwei alternativ zu verwendende weitere Blendenelemente 8 teilweise so verschlossen werden, dass diese zwischen sich einen Bereich der Ausnehmung 6 als Kabeldurchführung frei lassen, wenn eine Kabeldurchführung benötigt wird. Die Blendenelemente 8 können hierbei durch die magnetische Halterung einfach werkzeuglos gewechselt werden und richten sich beim Einsetzen in die Ausnehmung 6 aufgrund der magnetischen Halterung über die ersten Magnetverschlusselemente 10 und die zweiten Magnetverschlusselemente 12 selbsttätig aus.

Selbstverständlich können auch die zweiten Magnetverschlusselemente 12 als Magneten, insbesondere Permanentmagneten ausgestaltet sein. In diesem Fall ist es denkbar, die ersten Magnetverschlusselemente 10 statt als Magnet als nicht-magnetische aber magnetisierbare Stahlstifte auszugestalten. Der Unterschrank 2 kann weitere Sets von Blendenelementen 8 umfassen oder in einem Set von Blendenelementen 8 weitere Blendenelemente. Beispielsweise können die Blendenelemente 8 eines alternativen Sets anders gestaltet, z. B. mit einem anderen Dekor versehen sein.

## Patentansprüche

1. Unterschrank (2) für Vivarien, insbesondere Aquarien, mit Seitenwänden (4), **dadurch gekennzeichnet, dass** zumindest eine Seitenwand (4) eine Ausnehmung (6) und zumindest ein benachbart zur Ausnehmung (6) angeordnetes erstes Magnetverschlusselement (10) aufweist, wobei der Unterschrank (2) zumindest ein in die Ausnehmung (6) einbringbares und die Ausnehmung (6) in einer Einbauposition zumindest teilweise verschließendes Blendenelement (8) umfasst, das zumindest ein zweites Magnetverschlusselement (12) aufweist, wobei das zweite Magnetverschlusselement (12) in der Einbauposition korrespondierend zu dem ersten Magnetverschlusselement (10) angeordnet ist, so dass das Blendenelement (8) ausschließlich durch zwischen dem ersten Magnetverschlusselement (10) und dem zweiten Magnetverschlusselement (12) wirkende magnetische Kräfte gehalten in der Ausnehmung (6) festlegbar ist, wobei das erste Magnetverschlusselement (10) in eine die Ausnehmung (6) begrenzende Stirnseite der Seitenwand (4) und das zweite Magnetverschlusselement (12) in eine in der Einbausituation des Blendenelements (8) der die Ausnehmung (6) begrenzenden Stirnseite der Seitenwand (4) zugewandten Seite des Blendenelements (8) eingelassen ist, wobei das zumindest einen Blendenelement (8) bündig mit einer äußeren Oberfläche des Unterschranks (2) in der Ausnehmung (6) festlegbar ist und wobei der Unterschrank (2) keine begrenzenden Anschläge für das Blendenelement (8) aufweist.

2. Unterschrank nach einem der vorhergehenden Ansprüche, **dadurch gekennzeichnet, dass** das erste Magnetverschlusselement (10) und das zu dem ersten Magnetverschlusselement (10) korrespondierend am Blendenelement (8) angeordnete zweite Magnetverschlusselement (12) sich in der Einbausituation gegenüberliegende Flächen mit in etwa gleichen räumlichen Ausdehnungen aufweisen.

3. Unterschrank nach einem der vorherigen Ansprüche, **dadurch gekennzeichnet, dass** die Ausnehmung (6) eine rechteckige Kontur aufweist und sich horizontal über die gesamte Seitenwand (4) des Unterschranks (2) erstreckend angeordnet ist.

4. Unterschrank nach einem der vorhergehenden Ansprüche, **dadurch gekennzeichnet, dass** das Blendenelement (8) um 180° um eine Hauptachse gedreht in der Ausnehmung (6) festlegbar ist.

5. Unterschrank nach einem der vorhergehenden Ansprüche, **dadurch gekennzeichnet, dass** der Unterschrank (2) zumindest ein Set von zumindest zwei wahlweise in die Ausnehmung (6) einbringbaren Blendenelementen (8) unterschiedlicher Abmessungen umfasst, wobei ein Blendenelement (8) des Sets die Ausnehmung (6) in der Einbausituation vollständig verschließend ausgebildet ist und zumindest ein weiteres Blendenelement (8) des Sets die Ausnehmung (6) nur teilweise verschließend ausgebildet ist und wobei der Unterschrank (2) bei der Verwendung des die Ausnehmung (6) nur teilweise verschließenden weiteren Blendenelements (8) eine Kabeldurchführung in der Seitenwand (4) ausbildet.

6. Unterschrank nach Anspruch 5, **dadurch gekennzeichnet, dass** das Set von Blendenelementen (8) zwei, vorzugsweise baugleiche, die Ausnehmung (6) in der Einbausituation nur teilweise verschließende weitere Blendenelemente (8) umfasst, wobei die ersten und zweiten Magnetverschlusselemente (10,12) so angeordnet sind, dass die beiden weiteren Blendenelemente (8) des Sets dergestalt in der Ausnehmung (6) fixierbar sind, dass sie die Kabeldurchführung zwischen sich ausbilden.

## Claims

1. Base cabinet (2) for vivariums, in particular aquariums, having lateral walls (4), **characterized in that** at least one lateral wall (4) has a recess (6) and at least one first magnetic closure element (10) disposed adjacent to the recess (6), wherein the base cabinet (2) comprises at least one panel element (8) which is able to be inserted into the recess (6) and in an installed position at least partially closes the recess (6) and has at least one second magnetic closure element (12), wherein the second magnetic closure element (12) in the installed position is disposed so as to correspond to the first magnetic closure element (10) in such a way that the panel element (8) is held and able to be fixed in the recess (6) exclusively by magnetic forces acting between the first magnetic closure element (10) and the second magnetic closure element (12), wherein the first magnetic closure element (10) is embedded in an end face of the lateral wall (4) delimiting the recess (6), and the second magnetic closure element (12) is embedded in a side of the panel element (8) that in the installed situation of the panel element (8) faces the end face of the lateral wall (4) delimiting the recess (6), wherein the at least one panel element (8) is able to be fixed in the recess (6) so as to be flush with an outer surface of the base cabinet (2), and wherein the base cabinet (2) does not have any delimiting stops for the panel element (8).

2. Base cabinet according to one of the preceding claims, **characterized in that** the first magnetic closure element (10) and the second magnetic closure element (12), disposed on the panel element (8) so as to correspond to the first magnetic closure element (10), in the installed situation have mutually opposite faces with approximately identical spatial extents.

3. Base cabinet according to one of the preceding claims, **characterized in that** the recess (6) has a rectangular contour and is disposed so as to extend horizontally over the entire lateral wall (4) of the base cabinet (2).

4. Base cabinet according to one of the preceding claims, **characterized in that** the panel element (8) is able to be fixed in the recess (6) so as to be rotated by 180° about a main axis.

5. Base cabinet according to one of the preceding claims, **characterized in that** the base cabinet (2) comprises at least one set of at least two panel elements (8) of different dimensions that can be selectively inserted into the recess (6), wherein one panel element (8) of the set is designed to completely close the recess (6) in the installed situation, and at least one further panel element (8) of the set is designed to only partially close the recess (6), and wherein the base cabinet (2) when using the further panel element (8) that only partially closes the recess (6) forms a cable conduit in the lateral wall (4).

6. Base cabinet according to Claim 5, **characterized in that** the set of panel elements (8) comprises two, preferably identical, further panel elements (8) that only partially close the recess (6) in the installed situation, wherein the first and second magnetic closure elements (10, 12) are disposed in such a way that the two further panel elements (8) of the set are able to fixed in the recess (6) in such a way that they form the cable conduit between them.

## Revendications

1. Armoire inférieure (2) pour vivarium, notamment pour aquarium, avec des parois latérales (4), **caractérisée en ce qu'**au moins une paroi latérale (4) présente un évidement (6) et au moins un premier élément de fermeture magnétique (10) agencé au voisinage de l'évidement (6), l'armoire inférieure (2) comprenant au moins un élément d'obturation (8) pouvant être inséré dans l'évidement (6) et fermant au moins partiellement l'évidement (6) dans une position de montage, lequel présente au moins un deuxième élément de fermeture magnétique (12), le deuxième élément de fermeture magnétique (12) étant agencé en correspondance avec le premier élément de fermeture magnétique (10) dans la position de montage, de telle sorte que l'élément d'obturation (8) peut être immobilisé en étant maintenu dans l'évidement (6) exclusivement par des forces magnétiques agissant entre le premier élément de fermeture magnétique (10) et le deuxième élément de fermeture magnétique (12), le premier élément de fermeture magnétique (10) étant encastré dans un côté frontal de la paroi latérale (4) délimitant l'évidement (6) et le deuxième élément de fermeture magnétique (12) étant encastré dans un côté de l'élément d'obturation (8) tourné vers le côté frontal de la paroi latérale (4) délimitant l'évidement (6) dans la situation de montage de l'élément d'obturation (8), l'au moins un élément d'obturation (8) pouvant être immobilisé dans l'évidement (6) à fleur d'une surface extérieure de l'armoire inférieure (2) et l'armoire inférieure (2) ne présentant pas de butées de limitation pour l'élément d'obturation (8).

2. Armoire inférieure selon l'une quelconque des revendications précédentes, **caractérisée en ce que** le premier élément de fermeture magnétique (10) et le deuxième élément de fermeture magnétique (12) agencé de manière correspondante au premier élément de fermeture magnétique (10) sur l'élément d'obturation (8) présentent des surfaces opposées dans la situation de montage avec des extensions spatiales à peu près identiques.

3. Armoire inférieure selon l'une quelconque des revendications précédentes, **caractérisée en ce que** l'évidement (6) présente un contour rectangulaire et s'étend horizontalement sur toute la paroi latérale (4) de l'armoire inférieure (2).

4. Armoire inférieure selon l'une quelconque des revendications précédentes, **caractérisée en ce que** l'élément d'obturation (8) peut être immobilisé dans l'évidement (6) en étant tourné de 180° autour d'un axe principal.

5. Armoire inférieure selon l'une quelconque des revendications précédentes, **caractérisée en ce que** l'armoire inférieure (2) comprend au moins un ensemble d'au moins deux éléments d'obturation (8) de dimensions différentes pouvant être insérés au choix dans l'évidement (6), un élément d'obturation (8) de l'ensemble étant réalisé pour fermer complètement l'évidement (6) dans la situation de montage et au moins un autre élément d'obturation (8) de l'ensemble étant réalisé pour ne fermer que partiellement l'évidement (6) et l'armoire inférieure (2) réalisant un passage de câble dans la paroi latérale (4) lors de l'utilisation de l'autre élément d'obturation (8) ne fermant que partiellement l'évidement (6).

6. Armoire inférieure selon la revendication 5, **caractérisée en ce que** l'ensemble d'éléments d'obturation (8) comprend deux autres éléments d'obturation (8), de préférence de construction identique, ne fermant que partiellement l'évidement (6) dans la situation de montage, les premier et deuxième éléments de fermeture magnétique (10, 12) étant agencés de telle sorte que les deux autres éléments d'obturation (8) de l'ensemble peuvent être fixés dans l'évidement (6) de telle sorte qu'ils réalisent entre eux le passage de câble.
